(19) Europäisches Patentamt
European Patent Office
Office européen des brevets

(11) **EP 4 134 600 A1**

(12) **EUROPEAN PATENT APPLICATION**
published in accordance with Art. 153(4) EPC

(43) Date of publication:
**15.02.2023 Bulletin 2023/07**

(21) Application number: **20930457.5**

(22) Date of filing: **09.04.2020**

(51) International Patent Classification (IPC):
**F25B /(1968.09)**

(52) Cooperative Patent Classification (CPC):
**F25B 1/00; H02K 1/17; H02K 1/27; H02K 3/34**

(86) International application number:
**PCT/JP2020/015910**

(87) International publication number:
**WO 2021/205590 (14.10.2021 Gazette 2021/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **MITSUBISHI ELECTRIC
CORPORATION
Chiyoda-ku
Tokyo 100-8310 (JP)**

(72) Inventor: **BABA, Kazuhiko
Tokyo 100-8310 (JP)**

(74) Representative: **Pfenning, Meinig & Partner mbB
Patent- und Rechtsanwälte
Theresienhöhe 11a
80339 München (DE)**

(54) **REFRIGERATION CYCLE DEVICE AND AIR-CONDITIONING DEVICE**

(57) A refrigeration cycle apparatus (100) includes a compressor (101) that compresses a refrigerant (120) containing an ethylenic fluorohydrocarbon and a refrigerant channel (110) in which the refrigerant (120) compressed by the compressor (101) flows. The compressor (101) has a motor (1) and a compression mechanism part (3) that is driven by the motor (1). The motor (1) has a plurality of first steel sheets (13) stacked together. A width of the refrigerant channel (110) is wider than a thickness of a first clearance (13a) between the first steel sheets (13) adjoining each other among the plurality of first steel sheets (13).

FIG. 7

# Description

## TECHNICAL FIELD

The present disclosure relates to a refrigeration cycle apparatus and an air conditioner.

## BACKGROUND ART

There has been widespread a refrigeration cycle apparatus including a refrigerant, a compressor that compresses the refrigerant, and a refrigerant channel in which the refrigerant compressed by the compressor flows. The compressor includes a motor and a compression mechanism part that is driven by the motor. See, for example, Patent Reference 1. The motor of the compressor in the Patent Reference 1 includes a stator and a rotor including a permanent magnet.

## PRIOR ART REFERENCE

## PATENT REFERENCE

Patent Reference 1: WO 2018/008150 (see paragraph 0013 and FIG. 2, for example)

## SUMMARY OF THE INVENTION

## PROBLEM TO BE SOLVED BY THE INVENTION

In the Patent Reference 1, when a foreign substance such as a fragment of the permanent magnet is discharged from the compressor, the refrigerant channel may be clogged up with the foreign substance. In this case, the flow of the refrigerant in the refrigerant channel is hindered and the temperature and the pressure of the refrigerant rise excessively. In the case where the refrigerant is an ethylenic fluorohydrocarbon, dismutation reaction is likely to occur under high temperature and high pressure. When the dismutation reaction occurs, the refrigeration cycle apparatus may fail.

An object of the present disclosure is to prevent the clogging of the refrigerant channel with the foreign substance.

## MEANS FOR SOLVING THE PROBLEM

A refrigeration cycle apparatus according to an aspect of the present disclosure includes a refrigerant containing an ethylenic fluorohydrocarbon, a compressor that compresses the refrigerant, and a refrigerant channel in which the refrigerant compressed by the compressor flows. The compressor has a motor and a compression mechanism part that is driven by the motor. The motor has a plurality of first steel sheets stacked together. A width of the refrigerant channel is wider than a thickness of a first clearance between the first steel sheets adjoining each other among the plurality of first steel sheets.

## EFFECT OF THE INVENTION

According to the present disclosure, the clogging of the refrigerant channel with the foreign substance can be prevented.

## BRIEF DESCRIPTION OF THE DRAWINGS

FIG. 1 is a diagram showing the configuration of a refrigerant circuit in a cooling operation of an air conditioner according to a first embodiment.
FIG. 2 is a diagram showing the configuration of the refrigerant circuit in a heating operation of the air conditioner according to the first embodiment.
FIG. 3 is a sectional view showing the configuration of a compressor according to the first embodiment.
FIG. 4 is a sectional view showing the configuration of a compression mechanism part shown in FIG. 3.
FIG. 5 is a sectional view showing the configuration of a motor according to the first embodiment.
FIG. 6 is an enlarged sectional view showing the configuration of a rotor shown in FIG. 5.
FIG. 7 is a sectional view showing the configuration of a rotor core of the rotor shown in FIG. 6.
FIG. 8 is an enlarged plan view showing the configuration of a stator core of a stator shown in FIG. 5.
FIG. 9 is a plan view showing the configuration of the stator core shown in FIG. 8 extended into a belt shape.
FIG. 10 is a sectional view of the stator core shown in FIG. 8 taken along the line A10 - A10.
FIG. 11 is a perspective view showing a split core and an insulation part shown in FIG. 5.
FIG. 12 is a sectional view of the stator shown in FIG. 11 taken along the line A12 - A12.
FIG. 13(A) is a side view schematically showing the configuration of an expansion valve shown in FIG. 1 or 2.
FIG. 13(B) is a partial sectional view schematically showing the configuration of the expansion valve shown in FIG. 1 or 2.
FIG. 14(A) is an enlarged sectional view showing the configuration around a tip end part of a valve element when a throttle part of the expansion valve shown in FIG. 13(B) is in a fully closed state.
FIG. 14(B) is an enlarged sectional view showing the configuration around the tip end part of the valve element when the throttle part of the expansion valve shown in FIG. 13(B) is in a full open state.
FIG. 15 is a perspective view showing the configuration of an indoor heat exchanger shown in FIG. 1 or 2.
FIG. 16 is a sectional view of the indoor heat exchanger shown in FIG. 15 taken along the line A16 - A16.

FIG. 17 is a diagram showing the configuration of a motor drive device that drives the motor according to the first embodiment.

FIG. 18 is a sectional view showing the configuration of a rotor core of a rotor of a motor according to a modification.

## MODE FOR CARRYING OUT THE INVENTION

A refrigeration cycle apparatus and an air conditioner according to an embodiment of the present invention will be described below with reference to the drawings.

In this specification, types of the "refrigerant" are described by using refrigerant numbers starting with "R" stipulated in the international standard ISO 817.

## First Embodiment

## (Air Conditioner)

In a first embodiment, a description will be given by taking an example of a case where the refrigeration cycle apparatus is applied to an air conditioner 100. Incidentally, the refrigeration cycle apparatus may also be applied to a different type of device such as a refrigerator or a heat pump cycle apparatus.

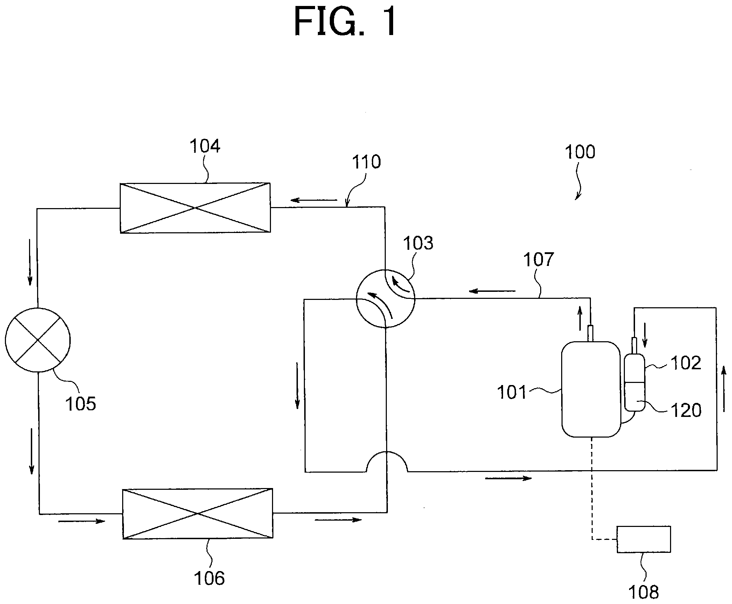

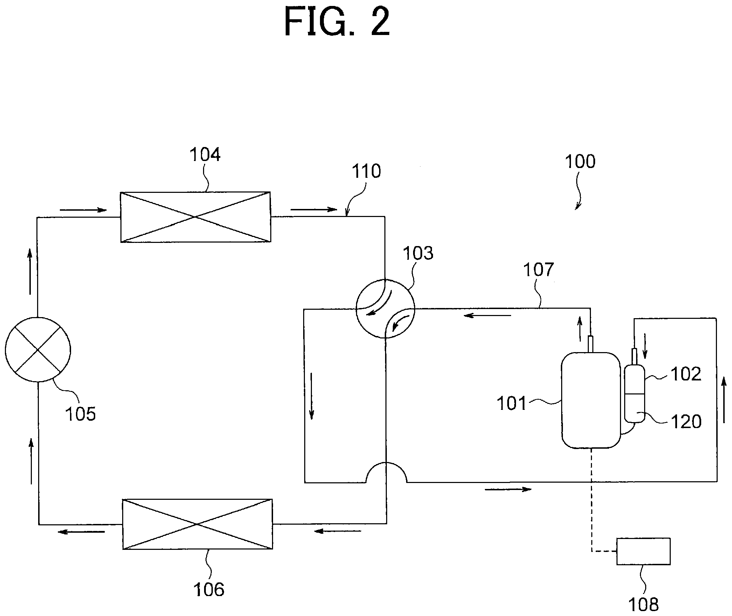

FIG. 1 is a diagram showing the configuration of a refrigerant circuit in a cooling operation of the air conditioner 100 according to the first embodiment. FIG. 2 is a diagram showing the configuration of the refrigerant circuit in a heating operation of the air conditioner 100 according to the first embodiment. As shown in FIGS. 1 and 2, the air conditioner 100 includes a refrigerant 120, a compressor 101 that compresses the refrigerant 120, and a refrigerant channel 110 in which the refrigerant 120 compressed by the compressor 101 flows.

The refrigerant channel 110 includes an accumulator 102, a four-way valve 103 as a channel selector valve, an outdoor heat exchanger 104, an expansion valve 105 as a decompression device, an indoor heat exchanger 106, and a pipe 107. The compressor 101, the accumulator 102, the outdoor heat exchanger 104, the expansion valve 105 and the indoor heat exchanger 106 are connected together by the pipe (for example, copper pipe) 107. A refrigerant circuit is formed by the compressor 101, the outdoor heat exchanger 104, the expansion valve 105 and the indoor heat exchanger 106.

The air conditioner 100 further includes a controller 108. The controller 108 controls the pressure, the temperature or the like in the compressor 101, for example. The controller 108 is a microcomputer, for example. Incidentally, the controller 108 may control other elements (for example, the four-way valve 103 or the like) forming the refrigerant circuit.

Next, the operation of the air conditioner 100 in the cooling operation will be described below. As shown in FIG. 1, the compressor 101 compresses the refrigerant 120 taken in from the accumulator 102 and sends out the compressed refrigerant 120 as a high-temperature and high-pressure refrigerant gas. The four-way valve 103 causes the high-temperature and high-pressure refrigerant gas sent out from the compressor 101 to flow to the outdoor heat exchanger 104. The outdoor heat exchanger 104 performs heat exchange between the high-temperature and high-pressure refrigerant gas and a medium (for example air), thereby condenses the refrigerant gas, and sends out the condensed refrigerant as a low-temperature and high-pressure liquid refrigerant. Namely, in the cooling operation, the outdoor heat exchanger 104 functions as a condenser.

The expansion valve 105 expands the liquid refrigerant sent out from the outdoor heat exchanger 104 and sends out the expanded liquid refrigerant as a low-temperature and low-pressure liquid refrigerant. Specifically, the low-temperature and high-pressure liquid refrigerant sent out from the outdoor heat exchanger 104 is decompressed by the expansion valve 105 and turns into a two-phase state of a low-temperature and low-pressure refrigerant gas and the low-temperature and low-pressure liquid refrigerant. The indoor heat exchanger 106 performs heat exchange between the refrigerant in the two-phase state sent out from the expansion valve 105 and a medium (for example air), thereby evaporates the liquid refrigerant, and sends out the refrigerant gas. Namely, in the cooling operation, the indoor heat exchanger 106 functions as an evaporator. The refrigerant gas sent out from the indoor heat exchanger 106 returns to the compressor 101 via the accumulator 102. As above, in the cooling operation, the refrigerant 120 circulates in the refrigerant circuit along the path indicated by the arrows in FIG. 1. Namely, in the cooling operation, the refrigerant 120 circulates in the order of the compressor 101, the outdoor heat exchanger 104, the expansion valve 105 and the indoor heat exchanger 106.

Next, the operation of the air conditioner 100 in the heating operation will be described below. The switching between the cooling operation and the heating operation is carried out by switching of the channel by the four-way valve 103. As shown in FIG. 2, in the heating operation, the four-way valve 103 causes the high-temperature and high-pressure refrigerant gas sent out from the compressor 101 to flow to the indoor heat exchanger 106. The indoor heat exchanger 106 performs heat exchange between the high-temperature and high-pressure refrigerant gas and air, thereby condenses the refrigerant gas, and sends out the refrigerant as the liquid refrigerant. Namely, in the heating operation, the indoor heat exchanger 106 functions as a condenser.

The liquid refrigerant sent out from the indoor heat exchanger 106 turns into a refrigerant in a two-phase state of a low-temperature and low-pressure liquid refrigerant and a low-temperature and low-pressure refrigerant gas in the expansion valve 105, and thereafter flows to the outdoor heat exchanger 104. The outdoor heat exchanger 104 performs heat exchange between the low-temperature and low-pressure liquid refrigerant and a medium (for example, air), thereby evaporates the liquid refrigerant, and sends out the refrigerant as a refrigerant gas. Namely, in the heating operation, the outdoor heat exchanger 104 functions as an evaporator. The refrigerant gas sent out from the outdoor heat exchanger 104 returns to the compressor 101 via the accumulator 102. As above, in the heating operation, the refrigerant 120 circulates in the refrigerant circuit along the path indicated by the arrows in FIG. 2. Namely, in the heating operation, the refrigerant 120 circulates in the order of the compressor 101, the indoor heat exchanger 106, the expansion valve 105 and the outdoor heat exchanger 104.

**(Refrigerant)**

Next, the refrigerant 120 will be described below. The refrigerant 120 is an ethylenic fluorohydrocarbon having a carbon double bond. In the first embodiment, the refrigerant 120 is R1123 (i.e., 1,1,2-trifluoroethylene). Incidentally, the refrigerant 120 is not limited to R1123 but may also be a different type of ethylenic fluorohydrocarbon.

Further, it is sufficient that the refrigerant 120 includes one or more types of ethylenic fluorohydrocarbons. The refrigerant 120 may also be a mixed refrigerant as a mixture of an ethylenic fluorohydrocarbon and a different refrigerant. For example, the refrigerant 120 may be a mixed refrigerant as a mixture of R1123 and R32 (difluoromethane). The ratio of R1132 in this mixed refrigerant is desired to be set within a range of 40 wt% to 60 wt%, for example. Incidentally, the refrigerant mixed with R1123 is not limited to R32. R1123 may also be mixed with one or more refrigerants out of R1234yf (i.e., 2,3,3,3-tetrafluoropropene), R1234ze(E) (i.e., trans-1,3,3,3-tetrafluoropropene), R1234ze(Z) (i.e., cis-1,3,3,3-tetrafluoropropene), R125 (1,1,1,2-pentafluoroethane) and R134a (i.e., 1,1,1,2-tetrafluoroethane).

Further, the refrigerant 120 may also be a refrigerant including two or more types of ethylenic fluorohydrocarbons. R1123 may be mixed with, for example, one or more types of ethylenic fluorohydrocarbons out of R1141 (i.e., fluoroethylene), R1132a (i.e., 1,1-difluoroethylene), R1132(E) (i.e., trans-1,2-difluoroethylene) and R1132(Z) (i.e., cis-1,2-difluoroethylene).

**(Configuration of Compressor)**

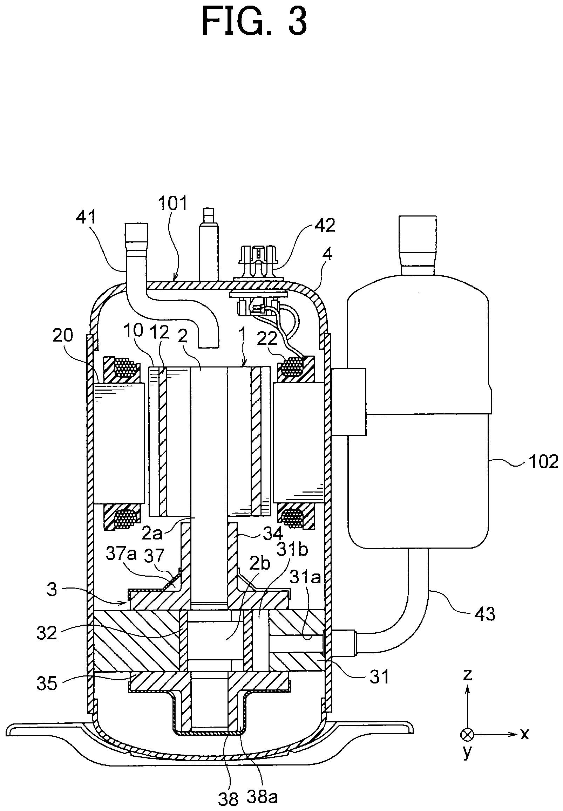

Next, the compressor 101 according to the first embodiment will be described below. FIG. 3 is a sectional view showing the configuration of the compressor 101 according to the first embodiment. The compressor 101 is a rotary compressor, for example. Incidentally, the compressor 101 is not limited to the rotary compressor but may also be a different type of compressor such as a low-pressure compressor or a scroll compressor.

As shown in FIG. 3, the compressor 101 includes a motor 1, a crankshaft 2 as a rotary shaft, a compression mechanism part 3, and a hermetic container 4. The motor 1 drives the compression mechanism part 3. The compression mechanism part 3 compresses the refrigerant 120 taken in from the accumulator 102. Incidentally, the configuration of the motor 1 and the compression mechanism part 3 will be described later.

The crankshaft 2 connects the motor 1 and the compression mechanism part 3 together. The crankshaft 2 includes a shaft body part 2a that is fixed to a rotor 10 of the motor 1 and an eccentric shaft part 2b that is fixed to a rolling piston 32 of the compression mechanism part 3.

In the following description, a direction along a circumference of a circle centering at the crankshaft 2 is referred to as a "circumferential direction". A direction of an axis C1 as a rotation center of the crankshaft 2 is referred to as an "axial direction". A direction of a straight line orthogonal to the axial direction and passing through the crankshaft 2 is referred to as a "radial direction". An xyz orthogonal coordinate system are shown in some drawings in order to facilitate the understanding of relationship between drawings. A z-axis is a coordinate axis parallel to the axis C1 of the crankshaft 2. A y-axis is a coordinate axis orthogonal to the z-axis. An x-axis is a coordinate axis orthogonal to both of the y-axis and the z-axis.

The hermetic container 4 is in a cylindrical shape and accommodates the motor 1 and the compression mechanism part 3. A not-shown refrigeration machine oil is stored in a bottom part of the hermetic container 4. The refrigeration machine oil is lubricating oil that lubricates sliding parts (for example, engagement part between the rolling piston 32 and the eccentric shaft part 2b) of the compression mechanism part 3. The refrigeration machine oil passes through an oil feed channel formed inside the crankshaft 2 and lubricates the sliding parts of the compression mechanism part 3.

The compressor 101 further includes a discharge pipe 41 and a terminal 42 attached to the top of the hermetic container 4. The discharge pipe 41 allows the refrigerant 120 compressed by the compression mechanism part 3 to be discharged to the outside of the hermetic container 4. The discharge pipe 41 is connected to the refrigerant circuit shown in FIG. 1 or 2.

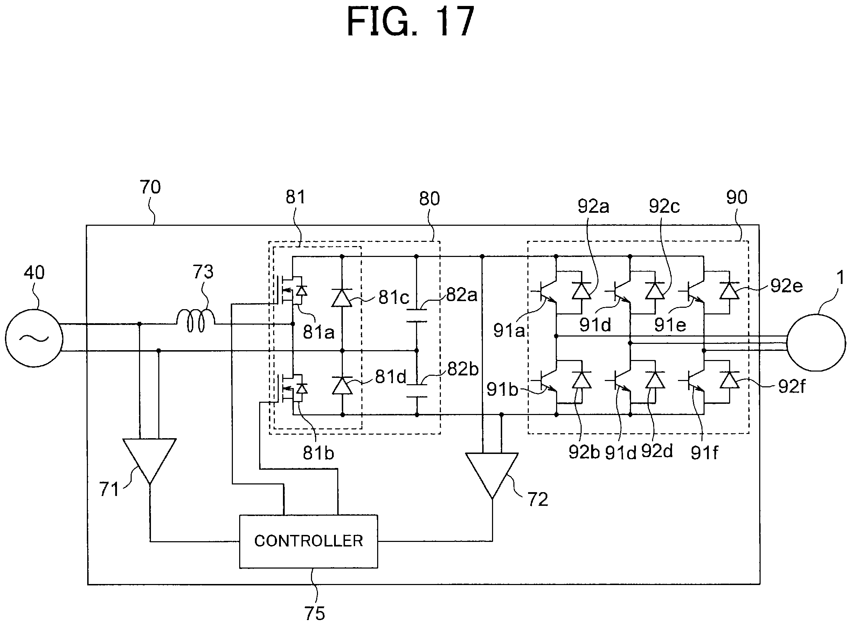

The terminal 42 is connected to a drive device (for example, motor drive device 70 shown in FIG. 17 which will be explained later) provided outside the compressor 101. Further, the terminal 42 supplies drive current to a coil 22 of a stator 20 of the motor 1 via lead wires 44. Accordingly, magnetic flux occurs in the coil 22, and the rotor 10 of the motor 1 rotates.

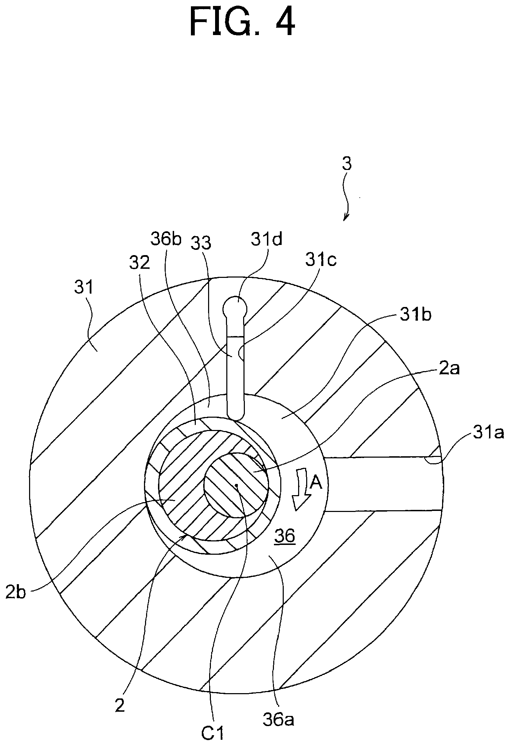

FIG. 4 is a sectional view showing the configuration of the compression mechanism part 3. As shown in FIGS. 3 and 4, the compression mechanism part 3 includes a cylinder 31, the rolling piston 32, a vane 33, an upper bearing part 34 and a lower bearing part 35.

The cylinder 31 includes an intake port 31a, a cylinder chamber 31b and a vane groove 31c. The intake port 31a is connected to the accumulator 102 via an intake pipe 43. The intake port 31a, as a channel in which the refrigerant 120 taken in from the accumulator 102 flows, connects to the cylinder chamber 31b.

The cylinder chamber 31b is a space in a cylindrical shape centering at the axis C1. The cylinder chamber 31b accommodates the eccentric shaft part 2b of the crankshaft 2, the rolling piston 32 and the vane 33. The shape of the rolling piston 32 as viewed in the z-axis direction is a ring shape. The rolling piston 32 is fixed to the eccentric shaft part 2b of the crankshaft 2.

The vane groove 31c connects to the cylinder chamber 31b. The vane 33 is provided in the vane groove 31c. A back pressure chamber 31d is formed in an end part of the vane groove 31c. The vane 33 is pressed toward the axis C1 by a not-shown spring arranged in the back pressure chamber 31d and is thereby in contact with an outer circumferential surface of the rolling piston 32. Accordingly, a space 36 surrounded by an inner circumferential surface of the cylinder chamber 31b, the outer circumferential surface of the rolling piston 32, the upper bearing part 34 and the lower bearing part 35 is divided by the vane 33 into an operation chamber (hereinafter referred to as an "intake chamber") 36a on an intake side and an operation chamber (hereinafter referred to as a "compression chamber") 36b on a compression side. The intake chamber 36a connects to the intake port 31a.

The vane 33 reciprocates in the y-axis direction in the vane groove 31c when the rolling piston 32 rotates eccentrically. The vane 33 is in a plate-like shape, for example. Incidentally, the rolling piston 32 and the vane 33 are separate components in the example shown in FIG. 4, but the rolling piston 32 and the vane 33 may also be formed integrally.

The upper bearing part 34 closes an end part of the cylinder chamber 31b on the +z-axis side. The lower bearing part 35 closes an end part of the cylinder chamber 31b on the -z-axis side. Each of the upper bearing part 34 and the lower bearing part 35 is fixed to the cylinder 31 by using a fastening member (for example, bolt).

Each of the upper bearing part 34 and the lower bearing part 35 has a discharge port for discharging the compressed refrigerant to the outside of the cylinder chamber 31b. The discharge port of each of the upper bearing part 34 and the lower bearing part 35 connects to the compression chamber 36b of the cylinder chamber 31b. The discharge port is provided with a not-shown discharge valve. The discharge valve opens when the pressure of the refrigerant compressed in the compression chamber 36b reaches a predetermined pressure or higher and discharges the high-temperature and high-pressure refrigerant to an internal space of the hermetic container 4. Incidentally, the lower bearing part 35 may also be configured to have no discharge port.

An upper discharge muffler 37 is attached to the upper bearing part 34 by using a fastening member (for example, bolt). A muffler chamber 37a is provided between the upper bearing part 34 and the upper discharge muffler 37. With this configuration, the refrigerant discharged through the discharge port of the upper bearing part 34 diffuses in the muffler chamber 37a, by which the occurrence of discharge noise of the refrigerant discharged through the discharge port of the upper bearing part 34 is inhibited.

Further, a lower discharge muffler 38 is attached to the lower bearing part 35 by using a fastening member (for example, bolt). A muffler chamber 38a is provided between the lower bearing part 35 and the lower discharge muffler 38. With this configuration, the refrigerant discharged through the discharge port of the lower bearing part 35 diffuses in the muffler chamber 38a, by which the occurrence of discharge noise of the refrigerant discharged through the lower bearing part 35 is inhibited. Incidentally, in the case where the discharge port is formed on one of the upper bearing part 34 and the lower bearing part 35, the discharge muffler may be attached to a frame on which the discharge port is formed.

**(Operation of Compressor)**

Next, the operation of the compressor 101 will be described below. The drive current is supplied from the terminal 42 to the motor 1 and accordingly, the rotor 10 of the motor 1 rotates. According to the rotation of the rotor 10, the crankshaft 2 rotates. When the crankshaft 2 rotates, the rolling piston 32 and the eccentric shaft part 2b rotate in the direction indicated by the arrow A in FIG. 4 around an axis that is eccentric with respect to the axis C1. By this operation, the refrigerant 120 (see FIG. 1 or 2) at a low pressure is taken into the intake chamber 36a communicated with the intake port 31a.

The refrigerant 120 taken into the intake chamber 36a is compressed by the rotation of the rolling piston 32. Specifically, when the rolling piston 32 rotates eccentrically, the vane 33 reciprocates in the vane groove 31c, by which the refrigerant 120 taken into the intake chamber 36a is moved to the compression chamber 36b and compressed. The refrigerant 120 compressed in the compression chamber 36b turns into a high-temperature and high-pressure refrigerant gas and is discharged through the upper discharge muffler 37 or the lower discharge muffler 38.

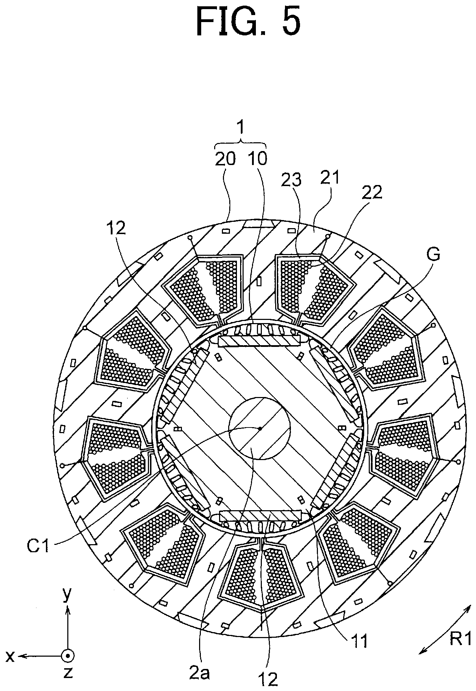

The refrigerant 120 compressed in the compression mechanism part 3 flows through gaps formed in the motor 1 (for example, a gap G shown in FIG. 5, gaps in the coil 22 wound on a stator core 21, a through hole formed in a rotor core 11, or the like), is thereafter discharged through the discharge pipe 41 to the outside of the hermetic container 4, and flows into the refrigerant channel 110.

The refrigeration machine oil is dissolved in the refrigerant 120 discharged through the discharge pipe 41. The refrigeration machine oil lubricates the refrigerant circuit and thereafter returns to the hermetic container 4. By this operation, decrease in lubricity at the sliding parts of the compression mechanism part 3 can be prevented and excellent sealability in the compression mechanism part 3 is secured.

**(Motor)**

Next, the configuration of the motor 1 according to the first embodiment will be described below. FIG. 5 is a sectional view showing the configuration of the motor 1 according to the first embodiment. As shown in FIG. 5, the motor 1 includes the rotor 10 and the stator 20. The rotor 10 is arranged inside the stator 20. Namely, the motor 1 according to the first embodiment is a motor of the inner rotor type. A gap G is formed between the rotor 10 and the stator 20. The gap G has a predetermined size within a range of 0.3 mm to 1.0 mm, for example.

**(Rotor)**

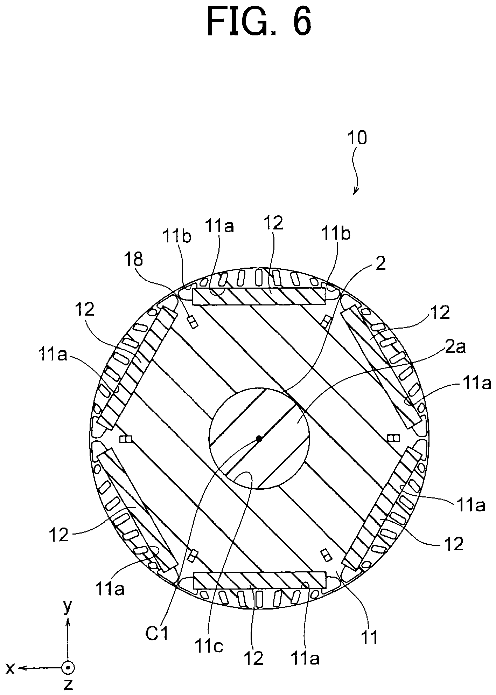

Next, the configuration of the rotor 10 will be described below. FIG. 6 is an enlarged sectional view showing the configuration of the rotor 10 shown in FIG. 5. As shown in FIGS. 5 and 6, the rotor 10 includes the rotor core 11 and a plurality of permanent magnets 12 attached to the rotor core 11.

The rotor core 11 includes a plurality of magnet insertion holes 11a arranged at intervals in the circumferential direction R1. The shape of the magnet insertion hole 11a as viewed in the z-axis direction is a linear shape. In other words, the magnet insertion hole 11a is an elongated hole that is elongated in the circumferential direction R1. In each magnet insertion hole 11a, one permanent magnet 12 is inserted, for example. In FIGS. 5 and 6, the rotor core 11 includes 6 magnet insertion holes 11a. Here, the number of poles of the motor 1 corresponds to the number of magnet insertion holes 11a (i.e., permanent magnets 12). In the first embodiment, the number of poles of the motor 1 is 6. Incidentally, the number of magnet insertion holes 11a is not limited to 6. It is sufficient that the number of the magnet insertion holes 11a is 2 or more. Further, the shape of the magnet insertion hole 11a as viewed in the z-axis direction may also be an arc-shape or a V-shape which is convex inward or outward in the radial direction, or a bathtub shape in which a convex part is formed on the outer side in the radial direction.

The rotor core 11 includes flux barriers 11b as leakage flux inhibition holes and a shaft hole 11c. The flux barrier 11b is formed in each end part of the magnet insertion hole 11a in the circumferential direction. A part between the flux barrier 11b and an outer circumference of the rotor core 11 is a thin-wall part, and thus leakage flux between adjoining magnetic poles is inhibited. The shaft body part 2a of the crankshaft 2 is fixed to the shaft hole 11c. The shaft body part 2a is fixed to the shaft hole 11c by means of press fitting, shrink fitting, welding or the like, for example.

The permanent magnets 12 are embedded in the magnet insertion holes 11a of the rotor core 11. Namely, in the first embodiment, the rotor 10 has the IPM (Interior Permanent Magnet) structure.

The permanent magnet 12 is in a plate-like shape, for example. The thickness of the permanent magnet 12 is 3.5 times or more of the gap G between the rotor 10 and the stator 20. The thickness of the permanent magnet 12 is 2.0 mm, for example. A minute clearance is formed between the permanent magnet 12 and the magnet insertion hole 11a. The clearance between the permanent magnet 12 and the magnet insertion hole 11a has a predetermined size within a range of 0.1 mm to 0.2 mm, for example. The refrigerant compressed by the compression mechanism part 3 flows through the clearance between the permanent magnet 12 and the magnet insertion hole 11a.

The permanent magnet 12 is a rare-earth magnet, for example. The permanent magnet 12 is a rare-earth magnet containing neodymium (Nd), iron (Fe) and boron (B). In the first embodiment, the permanent magnet 12 does not contain dysprosium (Dy) or terbium (Tr). Dy and Tr are rare-earth resources and thus are expensive. In the first embodiment, the cost for the permanent magnet 12 can be reduced since the content percentage of Dy and the content percentage of Tr in the permanent magnet 12 are 0 wt.%. Incidentally, the permanent magnet 12 may contain less than 1.0 wt. % of Dy, less than 1.0 wt. % of Tr, or both of them. Further, the permanent magnet 12 is not limited to the rare-earth magnet but may also be a different type of permanent magnet such as a ferrite magnet.

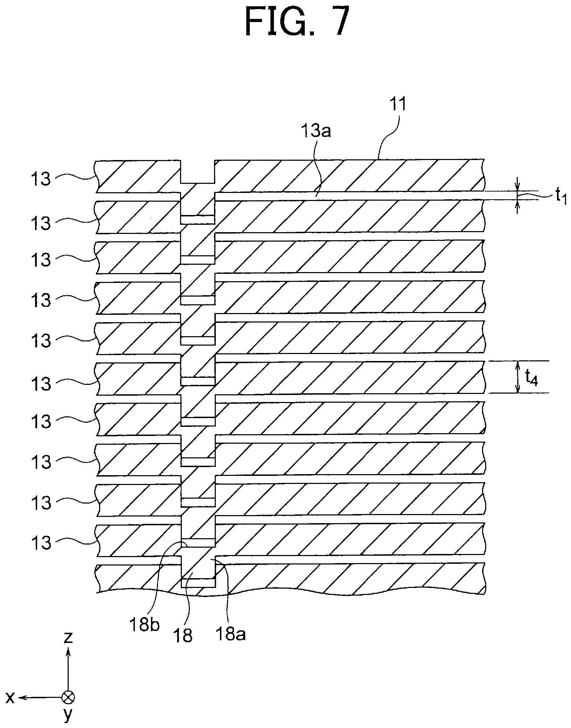

FIG. 7 is a sectional view showing the configuration of the rotor core 11 shown in FIG. 6. The rotor core 11 includes a plurality of first electromagnetic steel sheets 13 as a plurality of first steel sheets stacked in the z-axis direction. The rotor core 11 includes, for example, non-oriented electromagnetic steel sheets as the first electromagnetic steel sheets 13. Incidentally, the rotor core 11 is not limited to non-oriented electromagnetic steel sheets but may include oriented electromagnetic steel sheets. Further, the rotor core 11 is not limited to electromagnetic steel sheets but may include a different type of steel sheets having magnetism.

A sheet thickness $t_4$ of one first electromagnetic steel sheet 13 is a predetermined thickness within a range of 0.2 mm to 0.7 mm, for example. In the first embodiment, the sheet thickness $t_4$ of one first electromagnetic steel sheet 13 is 0.35 mm, for example.

The rotor core 11 is formed by fixing the plurality of first electromagnetic steel sheets 13 together by means of crimping. Accordingly, the rotor core 11 includes crimping parts 18. Each crimping part 18 is a crimping mark that is formed when the plurality of first electromagnetic steel sheets 13 adjoining in the z-axis direction are fixed together by means of crimping. In the first embodiment, the crimping part 18 is formed by means of V-crimping, i.e., fastening the plurality of adjoining electromagnetic steel sheets together using a V-shaped projection. By this method, fastening forth for fastening the plurality of adjoining first electromagnetic steel sheets 13 together can be increased as compared to a configuration in which the crimping part 18 is formed by means of round crimping, i.e., fastening the plurality of adjoining electromagnetic steel sheets together using a cylindrical projection.

The crimping part 18 includes a crimping convex part 18a and a crimping concave part 18b. The length of the crimping convex part 18a in the z-axis direction is greater than the sheet thickness $t_4$ of one first electromagnetic steel sheet 13. The crimping concave part 18b is a concave part in which the crimping convex part 18a of another crimping part 18 adjoining in the z-axis direction is fitted.

A first clearance 13a is formed between the first electromagnetic steel sheets 13 adjoining each other in the z-axis direction among the plurality of first electromagnetic steel sheets 13. The refrigerant 120 compressed by the compression mechanism part 3 flows through the first clearance 13a. With this configuration, the rotor core 11 and the permanent magnets 12 can be cooled down.

The thickness $t_1$ of the first clearance 13a is less than the sheet thickness $t_4$ of one first electromagnetic steel sheet 13. The thickness $t_1$ of the first clearance 13a is, for example, less than or equal to 1/10 of the sheet thickness $t_4$ of one first electromagnetic steel sheet 13. In the first embodiment, the thickness $t_1$ of the first clearance 13a is less than or equal to 10 $\mu$m and is a predetermined dimension within a range of 1 $\mu$m to 5 $\mu$m. In the first embodiment, the crimping part 18 is formed by means of V-crimping as described above. Accordingly, excellent dimensional accuracy of the thickness $t_1$ of the first clearance 13a is secured as compared to the configuration in which the crimping part 18 is formed by means of round crimping.

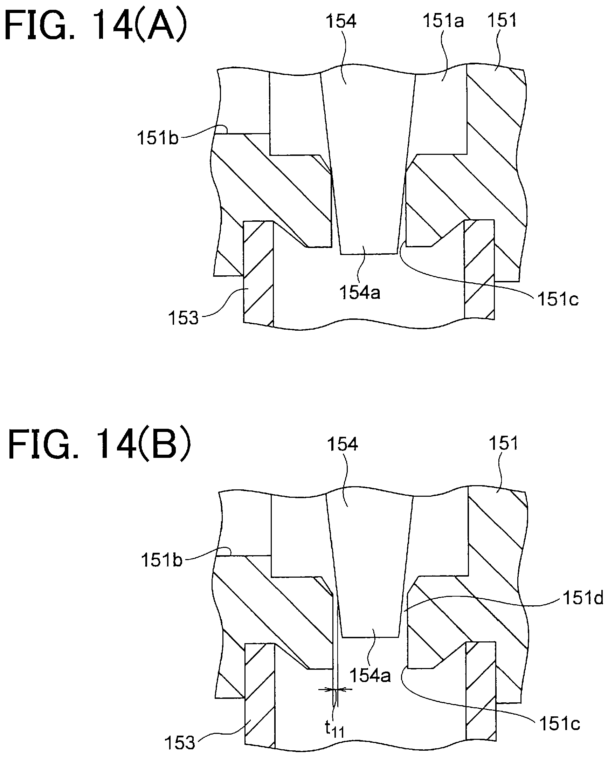

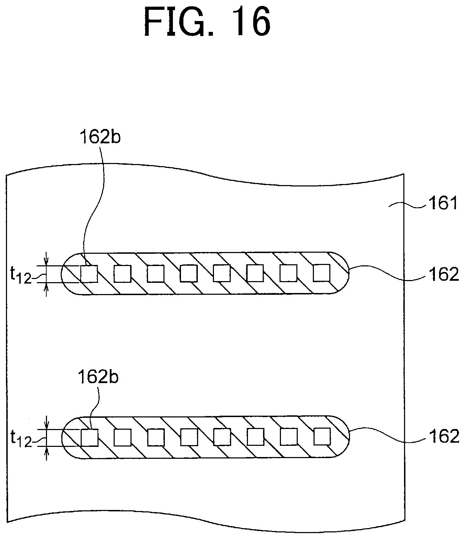

The width of the refrigerant channel 110 of the air conditioner 100 (see FIG. 1 or 2) is wider than the thickness $t_1$ of the first clearance 13a. Here, the width of the refrigerant channel 110 of the air conditioner 100 is the smallest width in the refrigerant channel 110. Specifically, the width of the refrigerant channel 110 is a minimum width $t_{11}$ of a throttle part 151d of the expansion valve 105 shown in FIG. 14(B) which will be explained later or a width $t_{12}$ of a channel 162b of a heat transmission pipe 162 of the indoor heat exchanger 106 shown in FIG. 16. The width $t_{11}$ is wider than the thickness $t_1$, and the width $t_{12}$ is wider than the thickness $t_1$. Namely, the width $t_{11}$ and the thickness $t_1$ satisfy the following expression (1), and the width $t_{12}$ and the thickness $t_1$ satisfy the following expression (2). Incidentally, in the air conditioner 100, it is sufficient that one of the following expressions (1) and (2) is satisfied.

$$t_{11} > t_1 \quad (1)$$

$$t_{12} > t_1 \quad (2)$$

Incidentally, there are cases where a fragment comes off of the permanent magnet 12 when vibration occurs during the rotation of the motor 1 or when the motor 1 is manufactured. There are cases where a fragment comes off of a first insulation part 23 or a second insulation part 27 of the stator 20 which will be described later. When a foreign substance such as a fragment of the permanent magnet 12 is discharged from the compressor 101 and blocks up the refrigerant channel 110, the flow of the refrigerant 120 in the refrigerant channel 110 is hindered, and the pressure and the temperature of the refrigerant 120 rise excessively, so that the air conditioner 100 may fail. In the first embodiment, the width of the refrigerant channel 110 of the air conditioner 100 (see FIG. 1 or 2) is wider than the thickness $t_1$ of the first clearance 13a. Thus, even when a foreign substance passes through the first clearance 13a and is discharged from the compressor 101, it is possible to prevent the foreign substance from clogging up the throttle part 151d of the expansion valve 105 or the channel 162b of the indoor heat exchanger 106. Accordingly, the flow of the refrigerant 120 in the refrigerant channel 110 is prevented from being hindered and the rise in the temperature or the pressure in the air conditioner 100 is inhibited.

Further, in the first embodiment, the thickness $t_1$ of the first clearance 13a is a predetermined dimension within the range of 1 $\mu$m to 5 $\mu$m as described above. With this configuration, foreign substances larger than 5 $\mu$m such as a fragment of the permanent magnet 12 can be prevented from passing through the first clearance 13a.

**(Stator)**

Next, the configuration of the stator 20 will be described below. As shown in FIG. 5, the stator 20 includes the stator core 21 and the coil 22 as a winding wound on the stator core 21. The stator core 21 is fixed to an inner wall of the hermetic container 4 shown in FIG. 3. The stator core 21 is fixed to the inner wall of the hermetic container 4 by means of press fitting, shrink fitting, welding or the like, for example.

The material of the core of the coil 22 is copper, for example. Incidentally, the material of the core of the coil 22 is not limited to copper but may also be different metal such as aluminum. The material of the cover film of the coil 22 is amideimide (AI) - esterimide (EI), for example. The coil 22 is wound by, for example, concentrated winding in which the coil 22 is directly wound around each tooth part 211b of the stator core 21 via an insulation part. Accordingly, an increase in the electric resistance of the coil 22 is inhibited, and thus an increase in the copper loss is inhibited. When electric current flows through the coil 22, magnetic flux occurs in the tooth parts 211b. Incidentally, the coil 22 may also be wound by distributed winding in which the coil 22 is wound to straddle a plurality of tooth parts 211b.

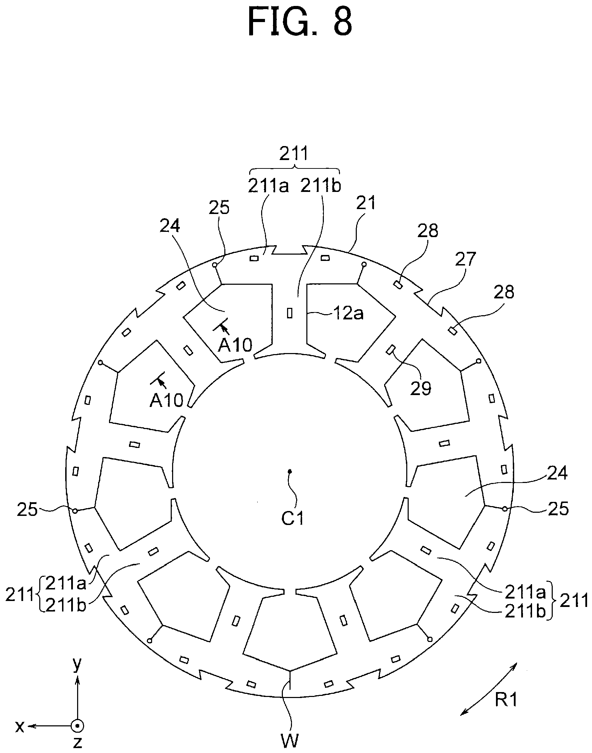

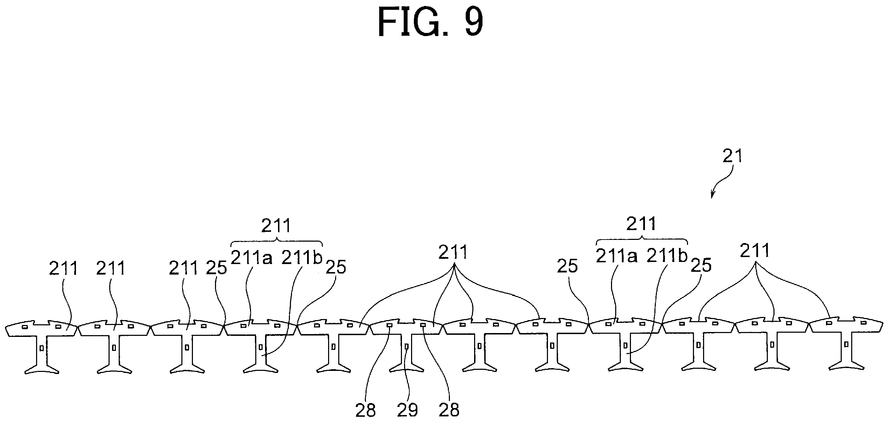

FIG. 8 is a plan view showing the configuration of the stator core 21 shown in FIG. 5. As shown in FIG. 8, the stator core 21 includes a plurality of split cores 211 arranged in the circumferential direction R1. In the first embodiment, the stator core 21 extended into a belt shape as shown in FIG. 9 which will be explained later is bent and thereafter end parts of the extended stator core 21 are joined (for example, welded) together to form the stator core 21. Thus, in the first embodiment, the stator core 21 includes joint parts W where split cores 211 adjoining each other in the circumferential direction R1 are joined together. Incidentally, the stator core 21 is not limited to the configuration in which a plurality of split cores 211 are connected together but may also be a single core in a ring shape.

The shape of the split core 211 as viewed in the z-axis direction is a T-shape. The split core 211 includes a back yoke part 211a and a tooth part 211b extending from the back yoke part 211a toward the axis C1. The back yoke part 211a includes connection parts 25 formed in end parts on both sides in the circumferential direction R1. The split cores 211 adjoining each other in the circumferential direction R1 are connected together via the connection part 25.

The tooth part 211b extends toward the axis C1 from a central part of the back yoke part 211a in the circumferential direction R1. A slot 24 as a space accommodating the coil 22 is formed between the tooth parts 211b adjoining each other in the circumferential direction R1. In FIG. 8, the number of slots 24 is 9. Since the number of poles of the motor 1 is 6 as described above, the combination of the number of poles and the number of slots is 6-pole 9-slot in the motor 1 according to the first embodiment. Incidentally, the combination of the number of poles and the number of slots in the motor 1 is not limited to 6-pole 9-slot but may also be a different combination.

A yoke crimping part 28 is formed on each side of the back yoke part 211a in the circumferential direction. A tooth crimping part 29 is formed in a central part of the tooth part 211b in the radial direction. In the first embodiment, each of the yoke crimping parts 28 and the tooth crimping parts 29 is formed by fastening a plurality of adjoining second electromagnetic steel sheets 26 together by means of V-crimping. By this method, fastening force for fastening the plurality of adjoining second electromagnetic steel sheets 26 together can be increased as compared to a configuration in which the yoke crimping parts 28 and the tooth crimping parts 29 are formed by means of round crimping. Incidentally, the positions of the yoke crimping parts 28 and the tooth crimping parts 29 are not limited to the positions shown in the figure but may also be different positions. For example, the tooth crimping part 29 may be formed in a central part in the circumferential direction of a tip end part of the tooth part 211b. Further, it is also possible that no tooth crimping part 29 is formed in the stator core 21 depending on required dimensional accuracy and rigidity of the stator core 21.

FIG. 9 is a plan view showing the configuration of the stator core 21 extended into the belt shape. As shown in FIG. 9, in the stator core 21 before being bent, the space between adjoining tooth parts 211b is wider as compared to that in the stator core 21 after being bent into a ring shape. Thus, in the first embodiment, the coil 22 is wound around the tooth parts 211b of the stator core 21 before being bent. By this method, the work of winding the coil 22 is facilitated.

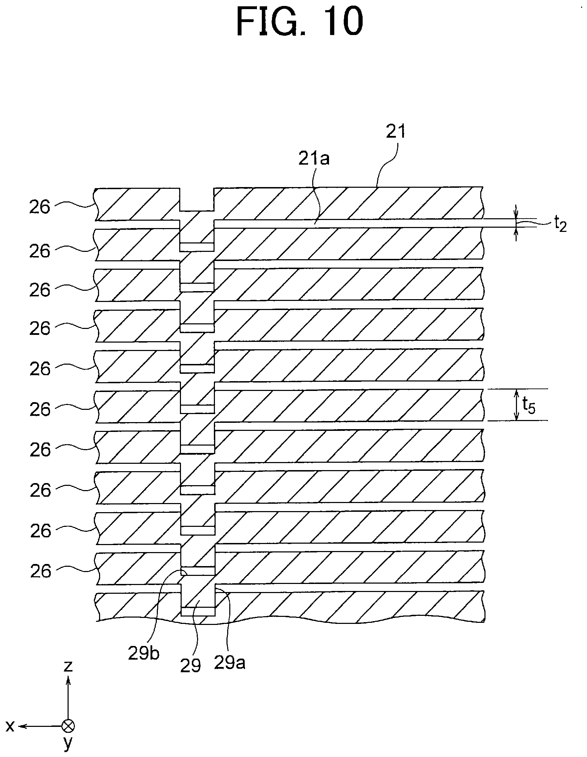

FIG. 10 is a sectional view showing the configuration of the stator core 21. As shown in FIG. 10, the stator core 21 includes a plurality of second electromagnetic steel sheets 26 as a plurality of second steel sheets stacked in the z-axis direction. The stator core 21 includes, for example, non-oriented electromagnetic steel sheets as the second electromagnetic steel sheets 26. Incidentally, the stator core 21 may include oriented electromagnetic steel sheets. Further, the stator core 21 is not limited to electromagnetic steel sheets but may include a different type of steel sheets having magnetism.

The tooth crimping part 29 includes a crimping convex part 29a and a crimping concave part 29b. The length of the crimping convex part 29a in the z-axis direction is greater than a sheet thickness $t_5$ of one second electromagnetic steel sheet 26. The crimping concave part 29b is a concave part in which the crimping convex part 29a of another tooth crimping part 29 adjoining in the z-axis direction is fitted.

The sheet thickness $t_5$ of one second electromagnetic steel sheet 26 is a predetermined thickness within a range of 0.2 mm to 0.7 mm. In the first embodiment, the sheet thickness $t_5$ of one second electromagnetic steel sheet 26 is thinner than the sheet thickness $t_4$ of one first electromagnetic steel sheet 13. With this configuration, the iron loss of the stator core 21 is unlikely to be high, and thus the temperature rise in the stator 20 can be inhibited. The sheet thickness $t_5$ is 0.25 mm, for example. Incidentally, the sheet thickness $t_5$ may also be equal to the sheet thickness $t_4$.

A second clearance 21a is formed between the second electromagnetic steel sheets 26 adjoining each other in the z-axis direction. The refrigerant 120 compressed by the compression mechanism part 3 flows through the second clearance 21a. With this configuration, the stator core 21 can be cooled down.

The thickness $t_2$ of the second clearance 21a is less than the sheet thickness $t_5$ of one second electromagnetic steel sheet 26. The thickness $t_1$ of the first clearance 13a is, for example, less than or equal to 1/10 of the sheet thickness $t_5$ of one second electromagnetic steel sheet 26. In the first embodiment, the thickness $t_2$ of the second clearance 21a is less than or equal to 10

μm, and specifically, is a predetermined dimension within the range of 1 μm to 5 μm. With this configuration, foreign substances larger than or equal to 5 μm can be prevented from flowing through the second clearance 21a.

The width of the refrigerant channel 110 of the air conditioner 100 (see FIG. 1 or 2) is wider than the thickness $t_2$ of the second clearance 21a. Specifically, the minimum width $t_{11}$ of the throttle part 151d of the expansion valve 105 shown in FIG. 14 (B) is wider than the thickness $t_2$, and the width $t_{12}$ of the channel 162b of the indoor heat exchanger 106 shown in FIG. 16 is wider than the thickness $t_2$. Namely, the width tn and the thickness $t_2$ satisfy the following expression (3), and the width $t_{12}$ and the thickness $t_2$ satisfy the following expression (4). Incidentally, in the air conditioner 100, it is sufficient that one of the following expressions (3) and (4) is satisfied.

$$t_{11} > t_2 \quad (3)$$

$$t_{12} > t_2 \quad (4)$$

As described above, the width of the refrigerant channel 110 of the air conditioner 100 (see FIG. 1 or 2) is wider than the thickness $t_2$ of the second clearance 21a. In other words, the width of the refrigerant channel 110 is greater than the size of a fragment of the permanent magnet 12. Thus, even when a fragment of the permanent magnet 12 passes through the second clearance 21a and is discharged from the compressor 101, it is possible to prevent the foreign substance of the permanent magnet 12 from clogging up the throttle part 151d of the expansion valve 105 or the channel 162b of the indoor heat exchanger 106. Accordingly, the flow of the refrigerant 120 in the refrigerant channel 110 is prevented from being hindered and the rise in the temperature or the pressure in the air conditioner 100 is inhibited.

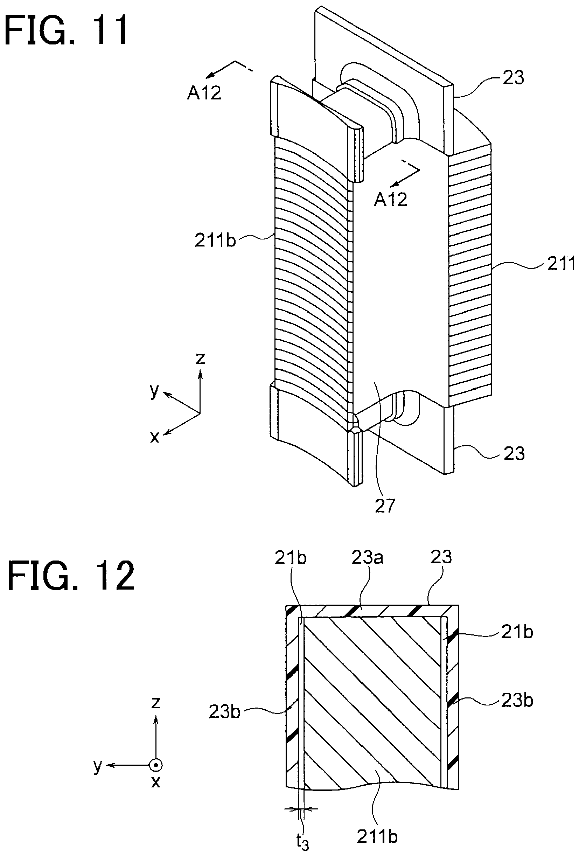

FIG. 11 is a perspective view showing one split core 211 and the insulation part covering the split core 211. As shown in FIGS. 5 and 11, the stator 20 includes a plurality of first insulation parts 23 and second insulation parts 27 that insulate the split cores 211 and the coil 22 from each other. The plurality of first insulation parts 23 cover end parts of the tooth parts 211b on both sides in the z-axis direction. The second insulation parts 27 are arranged between the first insulation parts 23. In other words, the second insulation parts 27 are arranged in the slots 24 shown in FIG. 5. The second insulation parts 27 cover side faces of the tooth part 211b on both sides in the circumferential direction R1.

The first insulation parts 23 and the second insulation parts 27 are formed of a resin material. The first insulation parts 23 are formed of polybutylene terephthalate (PBT), for example. The second insulation parts 27 are formed of polyethylene terephthalate (PET), for example. Namely, in the first embodiment, the insulation parts insulating the split cores 211 and the coil 22 from each other are formed of two types of resin materials. Incidentally, the first insulation parts 23 and the second insulation parts 27 may also be formed of the same resin material.

The first insulation parts 23 may be formed of tetrafluoroethylene - hexafluoropropylene copolymer (FEP), tetrafluoroethylene - perfluoroalkylvinylether copolymer (PFA), or the like. Further, the first insulation parts 23 may be formed of a different resin material such as polytetrafluoroethylene (PTFE), liquid crystal polymer (LCP) or phenolic resin.

The second insulation parts 27 may be formed of a different resin material whose oligomer liquation amount is small. The second insulation parts 27 may be formed of, for example, a resin material whose oligomer liquation amount is less than or equal to 1.5 %. This oligomer liquation amount is obtained by extraction by means of Soxhlet extraction in which refluxing is continued for 20 hours by using chloroform. Specifically, the second insulation parts 27 may be formed of polyphenylene sulfide (PPS). Incidentally, the oligomer is a polymer in which a small number of (for example, 50 - 100) monomers are bonded together. Further, the first insulation parts 23 may also be formed of PPS.

The thickness of the second insulation part 27 is less than the thickness of the first insulation part 23. The thickness of the second insulation part 27 is, for example, a predetermined thickness within a range of 0.1 mm to 0.3 mm. This increases the area of the slot 24 (see FIG. 8) as viewed in the z-axis direction, and thus the coil 22 with a large wire diameter can be accommodated in the slot 24. Accordingly, the electric resistance of the coil 22 decreases and the copper loss of the motor 1 is reduced.

FIG. 12 is a sectional view of the split core 211 and the first insulation part 23 shown in FIG. 11 taken along the line A12 - A12. As shown in FIG. 12, the first insulation part 23 includes an end face part 23a that is in contact with an end face of the tooth part 211b in the z-axis direction and side face parts 23b that cover side faces of the tooth part 211b on both sides in the circumferential direction R1. A third clearance 21b is formed between the tooth part 211b and the side face part 23b. The thickness $t_3$ of the third clearance 21b is less than 0.3 mm, for example. With this configuration, foreign substances larger than or equal to 0.3 mm can be prevented from flowing through the third clearance 21b.

In the first embodiment, the width of the refrigerant channel 110 of the air conditioner 100 (see FIG. 1 or 2) is wider than the thickness $t_3$ of the third clearance 21b. Specifically, the minimum width $t_{11}$ of the throttle part 151d of the expansion valve 105 shown in FIG. 14(B) is wider than the thickness $t_3$, and the width $t_{12}$ of the channel 162b of the indoor heat exchanger 106 shown in FIG. 16 is wider than the thickness $t_3$. Namely, the width $t_{11}$ and the thickness $t_3$ satisfy the following expression (5), and the width $t_{12}$ and the thickness $t_3$ satisfy the

following expression (6). Accordingly, even when a fragment of the insulation part or an oligomer liquating out of the insulation part passes through the third clearance 21b and is discharged from the compressor 101, it is possible to prevent the fragment of the insulation part or the oligomer from clogging up the throttle part 151d of the expansion valve 105 or the channel 162b of the indoor heat exchanger 106. In other words, the width of the refrigerant channel 110 is greater than the size of the fragment of the insulation part or the oligomer. Incidentally, in the air conditioner 100, it is sufficient that one of the following expressions (5) and (6) is satisfied.

$$t_{11} > t_3 \qquad (5)$$

$$t_{12} > t_3 \qquad (6)$$

Further, in the first embodiment, the thickness $t_1$ of the first clearance 13a, the thickness $t_2$ of the second clearance 21a and the thickness $t_3$ of the third clearance 21b satisfy the following expression (7).

$$t_2 > t_1 > t_3 \qquad (7)$$

Here, the area of the stator core 21 as viewed in the z-axis direction is larger than the area of the rotor core 11 as viewed in the z-axis direction and the area of regions between the stator core 21 and the first insulation parts 23 as viewed in the z-axis direction. Since the thickness $t_1$, the thickness $t_2$ and the thickness $t_3$ satisfy the above expression (7), the second clearance 21a having the smallest thickness is formed in the stator core 21 having a large area as viewed in the z-axis direction. Accordingly, the length in the radial direction of the second clearance 21a having a minute thickness is made long, and thus the foreign substance such as a fragment of the permanent magnet 12 is more likely to be captured in the second clearance 21a.

**(Expansion Valve)**

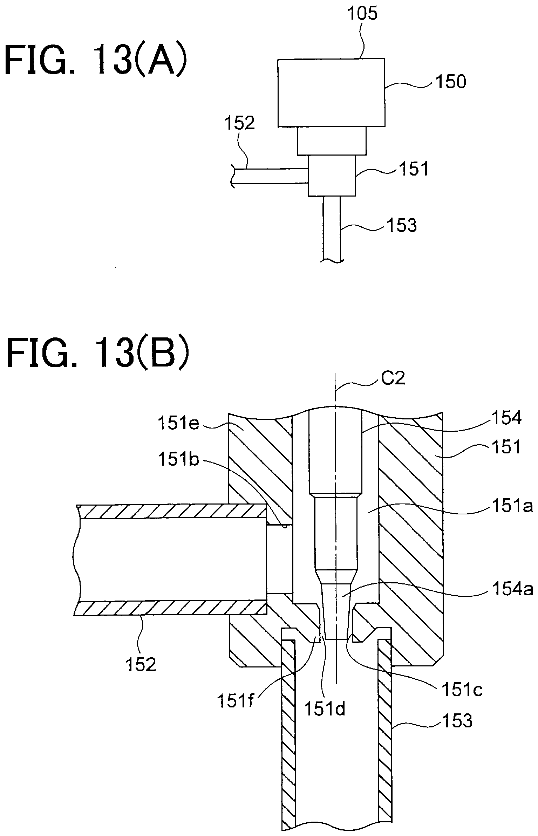

FIG. 13(A) is a side view showing the configuration of the expansion valve 105 shown in FIG. 1 or 2. FIG. 13(B) is a partial sectional view showing the configuration of the expansion valve 105. As shown in FIGS. 13(A) and 13(B), the expansion valve 105 includes a valve body 151 in a cylindrical shape. The valve body 151 includes a valve chamber 151a, a communication hole 151b, an orifice 151c, and a needle 154 as a valve element.
The valve chamber 151a is a space in the valve body 151 into which the refrigerant sent out from the condenser (for example, the outdoor heat exchanger 104 in the cooling operation shown in FIG. 1) flows. The communication hole 151b is a hole communicating between the valve chamber 151a and a first pipe 152 and is formed in a side wall part 151e of the valve body 151. The orifice 151c is a hole communicating between the valve chamber 151a and a second pipe 153 and is formed in a valve seat 151f as a base part of the valve body 151. The first pipe 152 and the second pipe 153 are pipes connected to the refrigerant circuit shown in FIG. 1 or 2. The refrigerant flows from the first pipe 152 to the second pipe 153 through the valve chamber 151a or flows from the second pipe 153 to the first pipe 152 through the valve chamber 151a.
A tip end part 154a of the needle 154 is inserted in the orifice 151c. The tip end part 154a of the needle 154 is in a conical shape whose diameter decreases toward the second pipe 153. The throttle part 151d is formed between the tip end part 154a of the needle 154 inserted in the orifice 151c and the valve seat 151f. The throttle part 151d is one of the channels in which the refrigerant 120 shown in FIG. 1 or 2 flows.
The needle 154 is driven by a motor 150 so as to reciprocate along an axis C2. The needle 154 reciprocates between a first position where the throttle part 151d is in a fully closed state and a second position where the throttle part 151d is in a full open state. By this movement, the size of the throttle part 151d is changed and thus the flow rate of the refrigerant flowing through the expansion valve 105 is adjusted.
FIG. 14(A) is a partial sectional view showing the configuration around the tip end part 154a of the needle 154 when the throttle part 151d is in the fully closed state. When the throttle part 151d is in the fully closed state, the tip end part 154a of the needle 154 is in contact with the valve seat 151f. In this case, the refrigerant does not flow through the throttle part 151d.
FIG. 14(B) is a partial sectional view showing the configuration around the tip end part 154a of the needle 154 when the throttle part 151d is in the full open state. The width $t_{11}$ of the throttle part 151d when the throttle part 151d is in the full open state is wider than the thickness $t_1$ of the first clearance 13a shown in FIG. 7, the thickness $t_2$ of the second clearance 21a shown in FIG. 10, and the thickness $t_3$ of the third clearance 21b shown in FIG. 12. With this configuration, the throttle part 151d can be prevented from being clogged up with the foreign substance such as a fragment of the permanent magnet 12 or the insulation part or the oligomer discharged from the compressor 101. Here, the width $t_{11}$ of the throttle part 151d means the minimum width when the throttle part 151d is in the full open state. The width $t_{11}$ of the throttle part 151d is, for example, a predetermined dimension within a range of 0.4 mm to 0.5 mm. In FIG. 14(B), the width $t_{11}$ of the throttle part 151d is 0.5 mm, for example. Incidentally, the width tu is not limited to 0.5 mm as long as it is wider than the thickness $t_1$, the thickness $t_2$ and the thickness $t_3$.

**(Heat Exchanger)**

Next, the configuration of each heat exchanger will be described below by taking the indoor heat exchanger 106 shown in FIG. 1 or 2 as an example. Incidentally, the description of the outdoor heat exchanger 104 is omitted since the configuration of the outdoor heat exchanger 104 is the same as the configuration of the indoor heat exchanger 106.

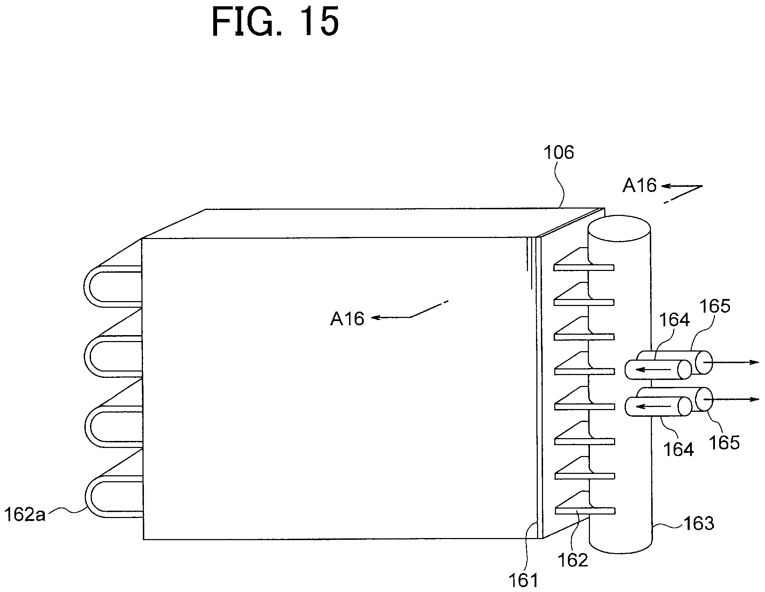

FIG. 15 is a perspective view showing the configuration of the indoor heat exchanger 106 shown in FIG. 1 or 2. As shown in FIG. 15, the indoor heat exchanger 106 includes a plurality of fins 161, a plurality of heat transmission pipes 162 in which the refrigerant flows, and a header 163 connected to the heat transmission pipes 162.

The plurality of fins 161 are arranged at intervals in a flow direction of the refrigerant (the direction of arrows shown in FIG. 16). Air sent from a not-shown blower flows between the plurality of fins 161. In the indoor heat exchanger 106, the heat exchange is performed between the refrigerant flowing in the heat transmission pipes 162 and the air flowing between the plurality of fins 161. Namely, the indoor heat exchanger 106 is of the fin and tube type. The fin 161 is, for example, a plate fin in a plate-like shape that is elongated in a direction orthogonal to the flow direction of the refrigerant. Incidentally, the fin 161 is not limited to the plate fin but may also be a different type of fin such as a corrugated fin.

Each of the plurality of heat transmission pipes 162 is a flat pipe that is elongated in the flow direction of the refrigerant. The plurality of heat transmission pipes 162 penetrate the plurality of fins 161. One end part 162a of the heat transmission pipe 162 is bent in a U-shape. The header 163 is connected to an end part of the heat transmission pipe 162 on the side opposite to the end part 162a.

The header 163 is a member in a cylindrical shape, for example. An internal space of the header 163 is communicated with the channels 162b (see FIG. 16) of the heat transmission pipes 162. An inflow pipe 164 and an outflow pipe 165 are connected to the header 163. The refrigerant flows in through the inflow pipe 164, flows through the header 163 and the heat transmission pipes 162, and thereafter flows out through the outflow pipe 165.

FIG. 16 is a sectional view of the indoor heat exchanger 106 shown in FIG. 15 taken along the line A16 - A16. As shown in FIG. 16, the heat transmission pipe 162 includes a plurality of channels 162b in which the refrigerant flows. Namely, the channel 162b of the heat transmission pipe 162 is one of refrigerant channels in the air conditioner 100 shown in FIG. 1 or 2. The sectional shape of the channel 162b is a square shape, for example. Incidentally, the sectional shape of the channel 162b is not limited to the square shape but may also be a different shape such as a rectangular shape, a circular shape or an elliptical shape.

The width $t_{12}$ of the channel 162b is wider than the thickness $t_1$ of the first clearance 13a shown in FIG. 7, the thickness $t_2$ of the second clearance 21a shown in FIG. 10, and the thickness $t_3$ of the third clearance 21b shown in FIG. 12. With this configuration, the channels 162b can be prevented from being clogged up with the foreign substance such as a fragment of the permanent magnet 12 or a resin part (i.e., the first insulation part 23 or the second insulation part 27) or the oligomer discharged from the compressor 101. Here, the width $t_{12}$ of the channel 162b means the minimum width in the channel 162b. In FIG. 16, the width $t_{12}$ is 1.4 mm, for example. Incidentally, the width $t_{12}$ is not limited to 1.4 mm as long as it is wider than the thickness $t_1$, the thickness $t_2$ and the thickness $t_3$.

**(Motor Drive Device 70)**

Next, the motor drive device 70 as a drive device that drives the motor 1 will be described below. FIG. 17 is a diagram showing the configuration of the motor drive device 70.

The motor drive device 70 includes a converter 80 and an inverter 90. The converter 80 converts AC voltage supplied from a commercial AC power supply 40 as an external power supply into DC voltage. The converter 80 includes a rectifier 81 and smoothing capacitors 82a and 82b for smoothing DC voltage outputted from the rectifier 81. The rectifier 81 is connected to the commercial AC power supply 40 via a reactor 73. By use of the small-sized reactor 73, the motor drive device 70 is mounted on the motor 1 with ease.

The rectifier 81 includes a plurality of switching elements 81a and 81b, a first diode 81c, and a second diode 81d. The switching elements 81a and 81b are MOSFETs (Metal-Oxide-Semiconductor Field-Effect Transistors), for example. Incidentally, the switching elements 81a and 81b are not limited to MOSFETs but may also be transistors of a different type such as IGBTs (Insulated Gate Bipolar Transistors) using silicon (Si), silicon carbide (SiC) or gallium nitride (GaN).

A series circuit of the first diode 81c and the second diode 81d is formed by connecting an anode side of the first diode 81c and a cathode side of the second diode 81d together. A connection point of the first diode 81c and the second diode 81d is an input end of the rectifier 81. Further, both ends of the series circuit of the first diode 81c and the second diode 81d are output ends of the rectifier 81.

The inverter 90 is connected to the converter 80. The inverter 90 converts DC voltage supplied from the converter 80 into desired high-frequency voltage and outputs the high-frequency voltage to the motor 1. The inverter 90 includes a plurality of (six in FIG. 17) inverter switches 91a to 91f and a plurality of (six in FIG. 17) flywheel diodes 92a to 92f.

The inverter switches 91a to 91f are IGBTs using Si, SiC or GaN, for example. The on-off timing of the inverter switches 91a to 91f is determined based on a carrier wave. The frequency of the carrier wave is 3 kHz to 100 kHz, for example. Incidentally, the inverter switches 91a to 91f are not limited to IGBTs but may also be transistors of a different type such as MOSFETs. When MOSFETs are used for the inverter switches 91a to 91f, the inverter switches 91a to 91f may be MOSFETs having the superjunction structure.

The motor drive device 70 further includes a power supply voltage detection unit 71, a DC voltage detection unit 72 and a controller 75. The power supply voltage detection unit 71 detects power supply voltage of the commercial AC power supply 40 as detection information and outputs the detection information to the controller 75. The power supply voltage detection unit 71 is an operational amplifier, for example. The DC voltage detection unit 72 detects voltage between both ends of the plurality of smoothing capacitors 82a and 82b as detection information and outputs the detection information to the controller 75. The DC voltage detection unit 72 is an operational amplifier, for example. The controller 75 makes the switching elements 81a and 81b of the rectifier 81 perform the on-off operation based on the detection information outputted from the power supply voltage detection unit 71 and the DC voltage detection unit 72.

The controller 75 improves the power factor of the motor 1 by inhibiting harmonic components included in the commercial AC power supply 40 by making the switching elements 81a and 81b perform the on-off operation (i.e., synchronous rectification operation) in predetermined sections or all sections in the commercial AC power supply 41 depending on operating conditions. Further, the controller 75 is capable of driving the motor 1 with high efficiency and at high power by increasing the value of the DC voltage supplied to the inverter 90 to the peak value of the voltage of the commercial AC power supply 41 or higher. Incidentally, predetermined switching operations performed by the switching elements 81a and 81b are higher than or equal to 20 kHz and lower than or equal to 100 kHz, for example. Accordingly, the value of the DC voltage supplied to the inverter 90 can be increased.

The motor 1 is connected to the inverter 90 via the terminal 42 shown in FIG. 3. The motor 1 is capable of varying the revolution speed and the torque and performing wide-range operation from low speed to high speed by executing variable speed driving based on PWM (Pulse Width Modulation) control performed by the inverter switches 91a to 91f included in the inverter 90.

**(Effect of First Embodiment)**

According to the first embodiment described above, the following effects are obtained.

With the air conditioner 100 as an example of the refrigeration cycle apparatus according to the first embodiment, the width $t_{11}$ of the throttle part 151d of the expansion valve 105 is wider than the thickness $t_1$ of the

first clearance 13a in the rotor core 11 of the motor 1, and the width $t_{12}$ of the channel 162b of the indoor heat exchanger 106 is wider than the thickness $t_1$ of the first clearance 13a in the rotor core 11 of the motor 1. With this configuration, even when a foreign substance such as a fragment of the permanent magnet 12 passes through the first clearance 13a and is discharged from the compressor 101, it is possible to prevent the foreign substance from clogging up the throttle part 151d of the expansion valve 105 or the channel 162b of the indoor heat exchanger 106. Accordingly, the flow of the refrigerant 120 in the refrigerant channel 110 is prevented from being hindered and the rise in the temperature or the pressure in the air conditioner 100 is inhibited. Therefore, even in the case where the refrigerant 120 is an ethylenic fluorohydrocarbon, the occurrence of the dismutation reaction of the refrigerant 120 can be prevented and failure of the air conditioner 100 can be prevented.

Further, with the air conditioner 100 according to the first embodiment, the width $t_{11}$ of the throttle part 151d of the expansion valve 105 is wider than the thickness $t_2$ of the second clearance 21a in the stator core 21 of the motor 1, and the width $t_{12}$ of the channel 162b of the indoor heat exchanger 106 is wider than the thickness $t_2$. With this configuration, even when a foreign substance such as a fragment of the permanent magnet 12 passes through the second clearance 21a and is discharged from the compressor 101, it is possible to prevent the foreign substance from clogging up the throttle part 151d of the expansion valve 105 or the channel 162b of the indoor heat exchanger 106. Accordingly, the flow of the refrigerant 120 in the refrigerant channel 110 is prevented from being hindered and the rise in the temperature or the pressure in the air conditioner 100 is inhibited. Therefore, even in the case where the refrigerant 120 is an ethylenic fluorohydrocarbon, the occurrence of the dismutation reaction of the refrigerant 120 can be prevented and the failure of the air conditioner 100 can be prevented.

Furthermore, with the air conditioner 100 according to the first embodiment, the width $t_{11}$ of the throttle part 151d of the expansion valve 105 is wider than the thickness $t_3$ of the third clearance 21b in the stator 20 of the motor 1, and the width $t_{12}$ of the channel 162b of the indoor heat exchanger 106 is wider than the thickness $t_3$. With this configuration, even when a foreign substance such as a fragment of the permanent magnet 12 passes through the third clearance 21b and is discharged from the compressor 101, it is possible to prevent the foreign substance from clogging up the throttle part 151d of the expansion valve 105 or the channel 162b of the indoor heat exchanger 106. Accordingly, the flow of the refrigerant 120 in the refrigerant channel 110 is prevented from being hindered and the rise in the temperature or the pressure in the air conditioner 100 is inhibited. Therefore, even in the case where the refrigerant 120 is an ethylenic fluorohydrocarbon, the occurrence of the dismutation reaction of the refrigerant 120 can be prevented and the failure of the air conditioner 100 can be prevented.

Moreover, with the air conditioner 100 according to the first embodiment, the thickness $t_1$ of the first clearance 13a, the thickness $t_2$ of the second clearance 21a and the thickness $t_3$ of the third clearance 21b in the motor 1 satisfy $t_2 > t_1 > t_3$. Here, the area of the stator core 21 as viewed in the z-axis direction is larger than the area of the rotor core 11 as viewed in the z-axis direction and the area of the regions between the stator core 21 and the first insulation parts 23 as viewed in the z-axis direction. Namely, the second clearance 21a having the smallest thickness is formed in the stator core 21 having a large area as viewed in the z-axis direction. Accordingly, the length in the radial direction of the second clearance 21a having a minute thickness is made long, and thus the foreign substance such as a fragment of the permanent magnet 12 is more likely to be captured in the second clearance 21a. Therefore, the foreign substance such as a fragment of the permanent magnet 12 is less likely to be discharged from the compressor 101, and thus the refrigerant channel 110 can be prevented from being clogged up with the foreign substance.

**Modification**

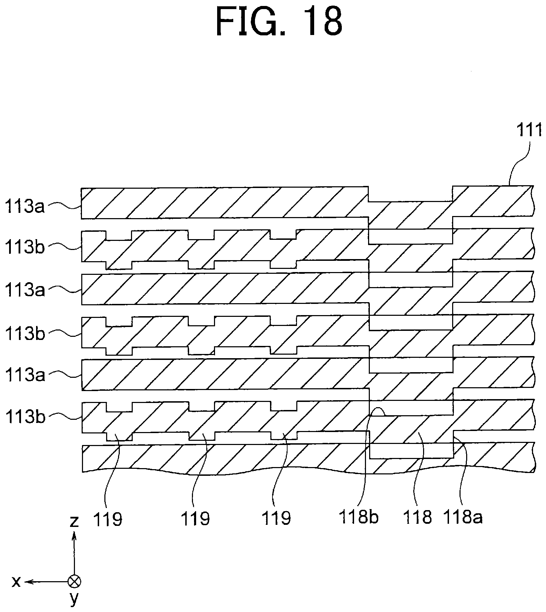

FIG. 18 is a sectional view showing the configuration of a rotor core 111 of a rotor of a motor according to a modification. The modification differs from the first embodiment in the configuration of the rotor core 111.

As shown in FIG. 18, first electromagnetic steel sheets 113 of the rotor core 111 include first sheet parts 113a and second sheet parts 113b adjoining the first sheet parts 113a in the z-axis direction. The first sheet parts 113a and the second sheet parts 113b are fixed to each other by crimping parts 118. Each crimping part 118 includes a crimping convex part 118a and a crimping concave part 118b in which the crimping convex part 118a of another sheet part adjoining in the z-axis direction is fitted.

The second sheet part 113b further includes a plurality of projection parts 119 projecting from a surface 113c on the -z-axis side toward the first sheet part 113a. Each projection part 119 is formed at a position in the second sheet part 113b different from that of the crimping part 118. Incidentally, the projection parts 119 may also be configured to project from a surface of the second sheet part 113b on the +z-axis side toward the first sheet part 113a.

Each projection part 119 is not fitted with the first sheet part 113a but faces the first sheet part 113a leaving a clearance in the z-axis direction. In other words, the length of the projection part 119 in the z-axis direction is less than the length of the crimping convex part 118a in the z-axis direction. With this configuration, in the clearance between the first sheet part 113a and the second sheet part 113b, the clearance between the first sheet part 113a and the projection part 119 is narrow. Accordingly, when a foreign substance such as a fragment of the permanent magnet 12 flows between the first sheet part 113a and the second sheet part 113b, the foreign substance is more likely to be captured between the first sheet part 113a and the projection part 119. With this configuration, the foreign substance such as a fragment of the permanent magnet 12 is less likely to be discharged through the discharge pipe 41 (see FIG. 3) of the compressor 101, and thus it is facilitated to prevent the refrigerant channel 110 (see FIG. 1 or 2) from being clogged up with the foreign substance. Incidentally, it is also possible to form the projection parts 119 in the stator core 21.

Except for the above-described features, the modification is the same as the first embodiment.

**DESCRIPTION OF REFERENCE CHARACTERS**

1: motor, 3: compression mechanism part, 10: rotor, 11: rotor core, 12: permanent magnet, 13, 113: first electromagnetic steel sheet, 13a: first clearance, 21: stator core, 21a: second clearance, 21b: third clearance, 23: insulation part, 26: second electromagnetic steel sheet, 100: air conditioner, 101: compressor, 104: outdoor heat exchanger, 105: expansion valve, 106: indoor heat exchanger, 113a: first sheet part, 113b: second sheet part, 119: projection part, 120: refrigerant

**Claims**

1. A refrigeration cycle apparatus comprising:

   a compressor that compresses a refrigerant containing an ethylenic fluorohydrocarbon; and a refrigerant channel in which the refrigerant compressed by the compressor flows, wherein the compressor has a motor and a compression mechanism part that is driven by the motor, wherein the motor has a plurality of first steel sheets stacked together, and wherein a width of the refrigerant channel is wider than a thickness of a first clearance between the first steel sheets adjoining each other among the plurality of first steel sheets.

2. The refrigeration cycle apparatus according to claim 1, wherein the plurality of first steel sheets are a plurality of steel sheets forming a rotor core of the motor.

3. The refrigeration cycle apparatus according to claim 2, wherein the motor has a stator core formed of a plurality of second steel sheets stacked together, and wherein the width of the refrigerant channel is wider than a thickness of a second clearance between the second steel sheets adjoining each other among the plurality of second steel sheets.

4. The refrigeration cycle apparatus according to claim 3, wherein the thickness of the second clearance is less than or equal to the thickness of the first clearance.

5. The refrigeration cycle apparatus according to claim 3 or 4, wherein the motor further has an insulation part that covers the stator core, and
wherein the width of the refrigerant channel is wider than a thickness of a third clearance between the stator core and the insulation part.

6. The refrigeration cycle apparatus according to claim 5, wherein the thickness of the first clearance is less than the thickness of the third clearance.

7. The refrigeration cycle apparatus according to claim 5 or 6, wherein the width of the refrigerant channel is wider than size of an oligomer liquating out of the insulation part.

8. The refrigeration cycle apparatus according to claim 1, wherein the plurality of first steel sheets are a plurality of steel sheets forming a stator core of the motor.

9. The refrigeration cycle apparatus according to any one of claims 1 to 8, wherein the plurality of first steel sheets comprise a first sheet part and a second sheet part adjoining the first sheet parts, and
wherein the second sheet part has a projection part projecting toward the first sheet part and facing the first sheet part leaving a gap therebetween.

10. The refrigeration cycle apparatus according to any one of claims 1 to 9, wherein the refrigerant channel has an expansion valve that expands the refrigerant, and

    wherein the expansion valve has a throttle part through which the refrigerant flows, and
    wherein the width of the refrigerant channel is a minimum width of the throttle part when the expansion valve is in a full open state.

11. The refrigeration cycle apparatus according to any one of claims 1 to 10, wherein the refrigerant channel has a heat exchanger that performs heat exchange between the refrigerant compressed by the compressor and a medium,

    wherein the heat exchanger has a heat transmission pipe having a channel in which the refrigerant flows, and
    wherein the width of the refrigerant channel is a minimum width of the channel of the heat transmission pipe.

12. The refrigeration cycle apparatus according to any one of claims 1 to 11, wherein the refrigerant contains one or more of R1123 and R1132(E).

13. An air conditioner comprising the refrigeration cycle apparatus according to any one of claims 1 to 12.

# FIG. 1

# FIG. 2

EP 4 134 600 A1

# FIG. 3

# FIG. 4

# FIG. 5

# FIG. 6

# FIG. 7

# FIG. 8

FIG. 9

# FIG. 10

# FIG. 11

# FIG. 12

EP 4 134 600 A1

# FIG. 13(A)

# FIG. 13(B)

26

# FIG. 14(A)

# FIG. 14(B)

# FIG. 15

EP 4 134 600 A1

# FIG. 16

# FIG. 17

# FIG. 18

## INTERNATIONAL SEARCH REPORT

International application No.

PCT/JP2020/015910

### A. CLASSIFICATION OF SUBJECT MATTER
Int. Cl. F25B41/06(2006.01)i, H02K3/34(2006.01)i, F25B1/00(2006.01)i,
H02K1/17(2006.01)i, H02K1/27(2006.01)i
FI: F25B1/00 396Z, F25B41/06 F, H02K1/17, H02K1/27 501K, H02K3/34 B
According to International Patent Classification (IPC) or to both national classification and IPC

### B. FIELDS SEARCHED
Minimum documentation searched (classification system followed by classification symbols)
Int. Cl. F25B41/06, H02K3/34, F25B1/00, H02K1/17, H02K1/27

Documentation searched other than minimum documentation to the extent that such documents are included in the fields searched
Published examined utility model applications of Japan        1922-1996
Published unexamined utility model applications of Japan      1971-2020
Registered utility model specifications of Japan              1996-2020
Published registered utility model applications of Japan      1994-2020

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2015/136979 A1 (MITSUBISHI ELECTRIC CORP.) 17 September 2015, paragraphs [0017]-[0086], fig. 1-5 | 1-13 |
| Y | JP 2019-161955 A (TOSHIBA CORP.) 19 September 2019, paragraph [0022], fig. 1 | 1-7, 10-13 |
| Y | WO 2019/008722 A1 (MITSUBISHI ELECTRIC CORP.) 10 January 2019, paragraphs [0011]-[0167], fig. 1-23, paragraphs [0011]-[0167], fig. 1-23 | 1, 3-13 |
| A | | 2 |
| Y | Microfilm of the specification and drawings annexed to the request of Japanese Utility Model Application No. 105906/1982 (Laid-open No. 013055/1984) (SANYO ELECTRIC CO., LTD.) 26 January 1984, description, p. 5, lines 7-16, fig. 2 | 5-6 |

☒ Further documents are listed in the continuation of Box C.    ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22.06.2020 | 07.07.2020 |

| Name and mailing address of the ISA/ Japan Patent Office 3-4-3, Kasumigaseki, Chiyoda-ku, Tokyo 100-8915, Japan | Authorized officer |
|---|---|
| | Telephone No. |

Form PCT/ISA/210 (second sheet) (January 2015)

## INTERNATIONAL SEARCH REPORT

| | International application No. |
| --- | --- |
| | PCT/JP2020/015910 |

**C (Continuation).  DOCUMENTS CONSIDERED TO BE RELEVANT**

| Category* | Citation of document, with indication, where appropriate, of the relevant passages | Relevant to claim No. |
| --- | --- | --- |
| Y | JP 2010-119191 A (YASKAWA ELECTRIC CORP.) 27 May 2010, paragraph [0003] | 5-6 |
| Y | JP 2004-052730 A (MATSUSHITA ELECTRIC INDUSTRIAL CO., LTD.) 19 February 2004, paragraphs [0002]-[0004] | 7 |
| Y | JP 2011-094039 A (HITACHI APPLIANCES, INC.) 12 May 2011, paragraph [0022] | 7 |
| Y | WO 2017/195249 A1 (MITSUBISHI ELECTRIC CORP.) 16 November 2017, paragraphs [0011]-[0021], fig. 1-3 | 9 |
| Y | JP 2012-067964 A (DAIKIN INDUSTRIES, LTD.) 05 April 2012, paragraphs [0027], [0028], [0039], fig. 1, 2 | 10 |

Form PCT/ISA/210 (continuation of second sheet) (January 2015)

| Patent Documents referred to in the Report | Publication Date | Patent Family | Publication Date |
|---|---|---|---|
| WO 2015/136979 A1 | 17.09.2015 | KR 10-2016-0133517 A CN 106104174 A | |
| JP 2019-161955 A | 19.09.2019 | (Family: none) | |
| WO 2019/008722 A1 | 10.01.2019 | (Family: none) | |
| JP 59-013055 U1 | 26.01.1984 | (Family: none) | |
| JP 2010-119191 A | 27.05.2010 | (Family: none) | |
| JP 2004-052730 A | 19.02.2004 | (Family: none) | |
| JP 2011-094039 A | 12.05.2011 | (Family: none) | |
| WO 2017/195249 A1 | 16.11.2017 | CN 109075626 A | |
| JP 2012-067964 A | 05.04.2012 | US 2013/0175351 A1 paragraphs [0026], [0027], [0038], fig. 1, 2 WO 2012/039450 A1 EP 2620724 A1 CN 103097836 A | |

International application No.

PCT/JP2020/015910

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018008150 A